# EUROPEAN PATENT SPECIFICATION

(11) **EP 3 763 600 B1**
(45) Date of publication and mention of the grant of the patent: **11.10.2023**
(21) Application number: 19764181.4
(22) Date of filing: 07.03.2019
(51) Int. Cl.: B62D 1/184, F02N 1/00

(54) **ADJUSTING SYSTEM OF AUTOMOBILE STEERING COLUMN**
EINSTELLSYSTEM FÜR EINE KRAFTFAHRZEUGLENKSÄULE
SYSTÈME DE RÉGLAGE DE COLONNE DE DIRECTION DE VÉHICULE AUTOMOBILE

(30) Priority: 08.03.2018 CN 201810191626
(43) Date of publication of application: 13.01.2021
(73) Proprietor: ThyssenKrupp Presta Shanghai Co., Ltd., Kangqiao Town, Pudong New District Shanghai 201315 (CN)
(72) Inventor: XUE, Zhengjie, Shanghai 201315 (CN)
(74) Representative: thyssenkrupp Intellectual Property GmbH
(86) International application number: PCT/CN2019/077258
(87) International publication number: WO 2019/170117

(56) References cited:
- EP-A1- 1 625 064
- WO-A1-2013/176191
- WO-A1-2017/135384
- CN-A- 105 438 248
- CN-A- 106 314 523
- CN-A- 108 482 477
- CN-U- 201 989 839
- CN-U- 203 511 751
- CN-U- 204 452 560
- CN-U- 204 472 875
- JP-A- 2016 185 772

## Description

### Technical Field

The present invention relates to an automobile steering column, in particular to an automobile steering column capable of being adjusted in length and height thereof.

### Background Art

An automobile steering column is an important constituent part of an automobile steering system, and is a steering mechanism used to connect a steering wheel and a steering gear. Conventionally, the steering column has an adjusting system for length and/or height or inclination adjustment of the steering column.

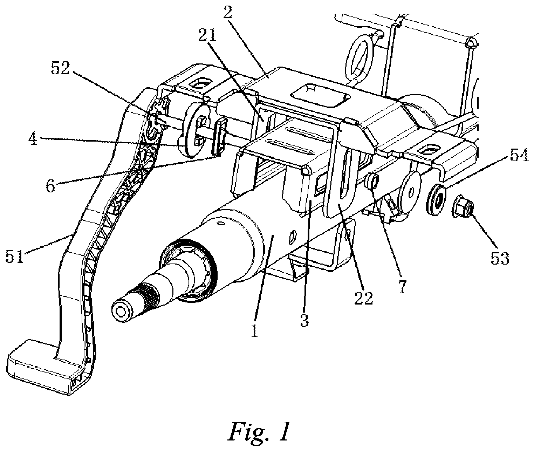

Fig. 1 shows an exploded schematic view of an adjusting system of an automobile steering column according to the prior art. As shown in Fig. 1, the adjusting system of an automobile steering column comprises a steering column sleeve 1, an upper bracket 2, a clamping bracket 3, a cam disk 4 and a handle assembly, wherein the clamping bracket 3 is fixedly arranged on an outer wall of the steering column sleeve 1. The upper bracket 2 comprises a pair of side plates 21, 22, and the side plates 21, 22 grip the clamping bracket 3. The handle assembly comprises a handle 51, a bolt 52 and a locking nut 53. As shown in Fig. 1, the bolt 52 sequentially passes through the handle 51, the cam disk 4, a first side plate 21 of the upper bracket 2, the clamping bracket 3, and a second side plate 22 of the upper bracket 2, and then is locked by the locking nut 53. By releasing the handle 51, the bolt 52 is movable in a pair of guide grooves of the upper bracket 2 and a pair of guide grooves of the clamping bracket 3, respectively, thereby achieving the length and/or height adjustment of the steering column.

In the aforementioned structure, due to the fact that the fit tolerances, the manufacturing tolerances and some small gaps exist among the components of the adjusting system of the steering column, when the adjusting system is in an adjustable state, the manual adjustment conducted by a driver on the height and/or the length of the steering column may cause frictional impact of the components, thereby generating noises, influencing NVH performances (noise, vibration or harshness) of an automobile, influencing user evaluation, and leaving an impression of poor quality of the product to a user.

An adjusting system of an automobile steering column showing the above mentioned features has been described in EP 1 625 064 A1, which shows an adjusting system of an automobile steering column that also comprises at least one lubricant storage structure.

The information disclosed in the background art of the invention is merely intended to facilitate understanding of the general background of the invention and should not be taken as an acknowledgement or any form of suggestion that the information constitutes the prior art already known to those of ordinary skill in the art.

### Summary of the Invention

An object of the present invention is to provide an automobile steering column capable of adjusting length and height, which can reduce noises generated due to fit tolerances and manufacturing tolerances among components of an adjusting system of the steering column and requires no need of re-adding lubricant throughout the entire life time of the products, or at least the time period for adding lubricant can be greatly extended.

The present invention provides an adjusting system of an automobile steering column, comprising a steering column sleeve, an upper bracket, a clamping bracket, a cam disk and a handle assembly, the clamping bracket being integrally combined with the steering column sleeve, the upper bracket comprising at least one side plate, the handle assembly comprising a handle, a bolt and a locking nut, and the bolt passing through the handle, the cam disk, the at least one side plate and the clamping bracket and then being locked by the locking nut,
wherein the adjusting system of an automobile steering column further comprises at least one frequency piece, which has an effect on the natural frequency of the whole system, thereby reducing the noises caused by gaps due to fit tolerances and manufacturing tolerances, and which is provided between the at least one side plate and the steering column sleeve, one side face of the at least one frequency piece is fixedly mounted on one of the upper bracket and the steering column sleeve, the other side face of the at least one frequency piece is a sliding surface, the other one of the upper bracket and the steering column sleeve forms a sliding fit surface slidably fitted to the sliding surface, and at least one lubricant storage structure is provided on the sliding surface or the sliding fit surface.

In the above-described adjusting system of an automobile steering column, preferably, the at least one side plate comprises a first side plate and a second side plate, two frequency pieces are provided, the two frequency pieces are respectively located between the first side plate and the steering column sleeve and between the second side plate and the steering column sleeve, and the bolt sequentially passes through the handle, the cam disk, the first side plate of the upper bracket, the clamping bracket, and the second side plate of the upper bracket, and then is locked by the locking nut.

The lubricant may be grease, lubricating oil, a solid lubricant or other friction-reducing compound.

In the above-described adjusting system of an automobile steering column, preferably, at least part of the at least one lubricant storage structure is always sealed between the sliding surface and the sliding fit surface.

In the above-described adjusting system of an automobile steering column, preferably, the at least one lubricant storage structure comprises a plurality of blind holes or blind grooves.

In the above-described adjusting system of an automobile steering column, preferably, the at least one lubricant storage structure has a serpentine shape.

In the above-described adjusting system of an automobile steering column, preferably, one side face of the at least one frequency piece is fixedly mounted on the steering column sleeve, and the at least one lubricant storage structure is provided on the sliding surface.

In the above-described adjusting system of an automobile steering column, preferably, one side face of the at least one frequency piece is fixedly mounted on the steering column sleeve, and the at least one lubricant storage structure is provided on the sliding fit surface.

In the above-described adjusting system of an automobile steering column, preferably, one side face of the at least one frequency piece is fixedly mounted on the upper bracket, and the at least one lubricant storage structure is provided on the sliding surface.

In the above-described adjusting system of an automobile steering column, preferably, the at least one frequency piece is made of vibration damping materials. Further preferably, the vibration damping materials are engineering plastics or resin, or the vibration damping materials are high-damping alloy. Even more preferably, when the engineering plastics are high-strength foamed plastics, the at lease one lubricant storage structure comprises cells of the high-strength foamed plastics.

By providing the at least one frequency piece in the above-described adjusting system of an automobile steering column according to the present invention, the natural frequency of the whole system can be improved, thereby reducing the noises caused by gaps due to fit tolerances and manufacturing tolerances. By providing the at least one lubricant storage structure, particularly enabling at least part of the at least one lubricant storage structure to be always sealed between the sliding surface and the sliding fit surface, lubricant supplement may be continuously obtained between the sliding surface of the at least one frequency piece and the sliding fit surface of the upper bracket, the time period of adding lubricant may be greatly extended, and even no lubricant needs to be added again throughout the entire life time of the products.

The method and device of the present invention have other features and advantages that will be apparent from or set forth in detail in the accompanying drawings and the following detailed description of embodiments, which are incorporated herein, and which together serve to explain certain principles of the present invention.

### Brief Description of the Drawings

Fig. 1 is a perspective view of an adjusting system of an automobile steering column in the prior art.
Fig. 2A is a side view of an adjusting system of an automobile steering column according to a first embodiment of the present invention.
Fig. 2B is a radial cross-sectional view of the adjusting system of an automobile steering column shown in Fig. 2A.
Fig. 2C is an enlarged partial view taken along a section A-A of Fig. 2A to show the connection fitting relationship among an upper bracket, a frequency piece, and a steering column sleeve.
Fig. 2D shows a perspective view of the frequency piece in the adjusting system of an automobile steering column shown in Fig. 2A.
Fig. 3A is a side view of an adjusting system of an automobile steering column according to a second embodiment of the present invention.
Fig. 3B is a radial cross-sectional view of the adjusting system of an automobile steering column shown in Fig. 3A.
Fig. 3C is an enlarged partial view taken along a section A-A of Fig. 3A to show the connection fitting relationship among an upper bracket, a frequency piece, and a steering column sleeve.
Fig. 3D shows a perspective view of the frequency piece in the adjusting system of an automobile steering column shown in Fig. 3A.
Fig. 4A is a side view of an adjusting system of an automobile steering column according to a third embodiment of the present invention.
Fig. 4B is a radial cross-sectional view of the adjusting system of an automobile steering column shown in Fig. 4A.
Fig. 4C shows a view of an upper bracket in the third embodiment of the present invention shown in Fig. 4A.

### List of reference numerals:

- 1: Steering column sleeve
- 2: Upper bracket
- 21, 22: Side plate
- 3: Clamping bracket
- 4: Cam disk
- 51: Handle
- 52: Bolt
- 53: Locking nut
- 101: Steering column sleeve
- 102: Upper bracket
- 102a: Lubricant storage structure
- 103: Clamping bracket
- 104: Cam disk
- 105: Frequency piece
- 105a: Lubricant storage structure
- 151: Handle
- 152: Bolt
- 153: Locking nut.

It should be understood that the drawings, which are not necessarily drawn to scale, and illustrate various features of the basic principles of the present invention which are somewhat simplified. The particular design features of the present invention disclosed herein, including, for example, particular dimensions, orientations, locations and configurations, will be determined in part by the particular intended application and use environments.

In the drawings, like reference numerals refer to the same or equivalent parts throughout several figures of the drawings.

### Detailed Description of Embodiments

Reference will now be made in detail to various embodiments of the present invention, examples of which are illustrated in the accompanying drawings and the following description. Although the present invention is described in connection with exemplary embodiments, it should be understood that the description is not intended to limit the present invention to those exemplary embodiments. On the contrary, the present invention is intended to cover not only these exemplary embodiments, but also various alternatives, modifications, equivalents, and other embodiments that may be included within the spirit and scope of the present invention as defined by the appended claims.

In the following, exemplary embodiments of the present invention will be described in detail with reference to the accompanying drawings shown. The exemplary embodiments are examples and may be implemented in a variety of forms by those skilled in the art. Accordingly, the present invention is not limited to the exemplary embodiments described herein.

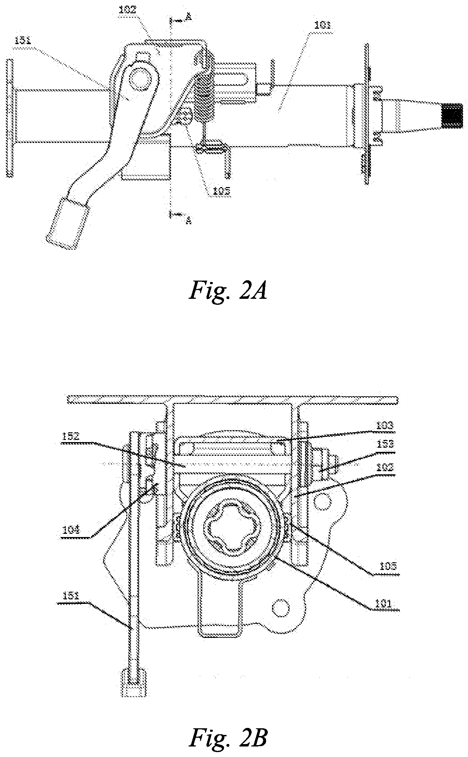

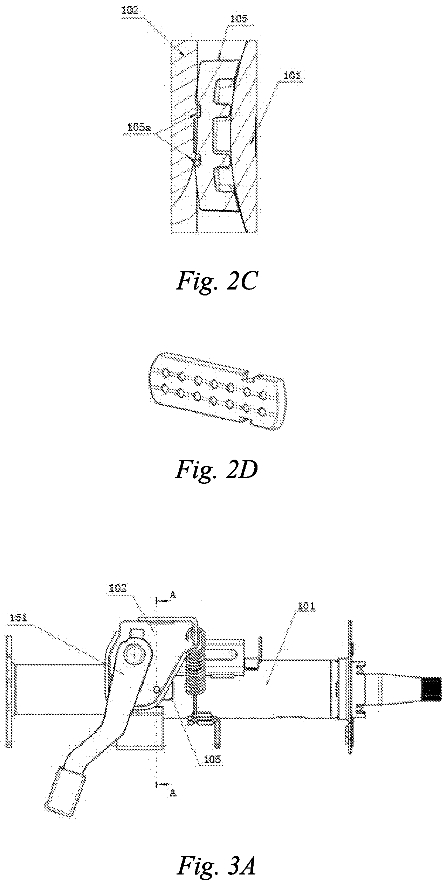

Fig. 2A is a side view of an adjusting system of an automobile steering column according to a first embodiment of the present invention. Fig. 2B is a radial cross-sectional view of the adjusting system of an automobile steering column shown in Fig. 2A. Fig. 2C is an enlarged partial sectional view taken along a section A-A of Fig. 2A to show the connection fitting relationship among an upper bracket, a frequency piece, and a steering column sleeve. Fig. 2D shows a perspective view of the frequency piece in the adjusting system of an automobile steering column shown in Fig. 2A.

As shown in Figs. 2A and 2B, the adjusting system of an automobile steering column according to the present invention comprises: a steering column sleeve 101, an upper bracket 102, a clamping bracket 103, a cam disk 104 and a handle assembly, wherein the clamping bracket 103 is integrally combined with the steering column sleeve 101; the upper bracket 102 comprises a side plate; the handle assembly comprises a handle 151, a bolt 152 and a locking nut 153; and the bolt 152, after passing through the handle 151, the cam disk 104, the side plate of the upper bracket 102, and the clamping bracket 103, is locked by the locking nut 153. The adjusting system of an automobile steering column further comprises at least one frequency piece 105 provided between the side plate of the upper bracket 102 and the steering column sleeve 101, one side face of the at least one frequency piece 105 is fixedly mounted on the steering column sleeve 101, the other side face of the at least one frequency piece 105 is a sliding surface, the upper bracket 102 forms a sliding fit surface slidably fitted to the sliding surface, and at least one lubricant storage structure 105a is provided on the sliding surface. As a preferred structure, at least part of the at least one lubricant storage structure is always sealed between the sliding surface and the sliding fit surface.

In the structure shown in Figs. 2A and 2B, the upper bracket 102 comprises two side plates, namely a first side plate and a second side plate, two frequency pieces 105 are provided, the two frequency pieces 105 are respectively located between the first side plate and the steering column sleeve 101 and between the second side plate and the steering column sleeve 101, and the bolt 152 sequentially passes through the handle 151, the cam disk 104, the first side plate of the upper bracket, the clamping bracket 103, and the second side plate of the upper bracket, and then is locked by the locking nut 153.

However, it should be noted that it is also feasible to use only one side plate for the upper bracket. For example, the bolt 152, after sequentially passing through the handle 151, the cam disk 104, the side plate of the upper bracket 102, and the clamping bracket 103, is locked by the locking nut 153.

As shown in Fig. 2C, the frequency piece 105 and the steering column sleeve 101 are embedded with each other through a mortise-and-tenon structure to form a fixed connection. In Fig. 2C, when the handle assembly is unlocked by rotating the cam disk 104, the frequency piece 105 fixedly connected to the steering column sleeve 101 can slide relative to the upper bracket 102. As shown in Fig. 2C, the lubricant storage structures 105a on the frequency piece 105 are formed on the sliding surface which faces a sliding fit surface on an inner side of the first side plate of the upper bracket 102 and a sliding fit surface on an inner side of the second side plate of the upper bracket.

The lubricant storage structures 105a described above may be blind holes or blind grooves, as shown in Fig. 2D. Although a plurality of blind holes or blind grooves are shown in the figure, it is also feasible to use only a single lubricant storage structure.

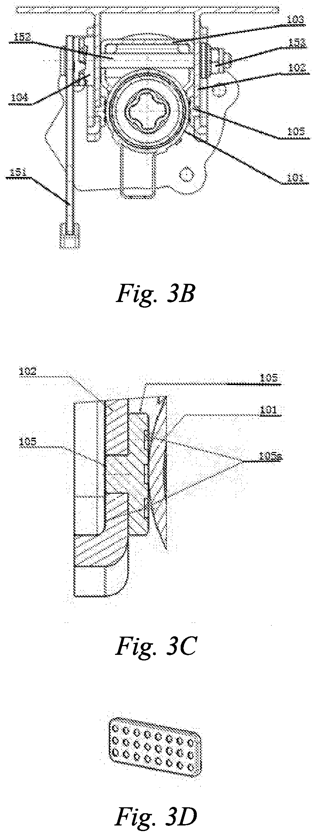

Fig. 3A is a side view of an adjusting system of an automobile steering column according to a second embodiment of the present invention. Fig. 3B is a radial cross-sectional view of the adjusting system of an automobile steering column shown in Fig. 3A. Fig. 3C is an enlarged partial sectional view taken along a section A-A of Fig. 3A to show the connection fitting relationship among an upper bracket, a frequency piece, and a steering column sleeve.

In comparison with the embodiment shown in Fig. 2A, the difference from the adjusting system of an automobile steering column shown in Fig. 3A lies in that: one side face of the frequency piece 105 is fixedly mounted on the upper bracket 102, the other side face of the frequency piece is a sliding surface, the steering column sleeve 101 forms a sliding fit surface slidably fitted to the sliding surface, and a plurality of lubricant storage structures 105a are provided on the sliding surface.

As shown in Fig. 3C, the frequency piece 105 and the upper bracket 102 are embedded with each other through a mortise-and-tenon structure to form a fixed connection. In Fig. 3C, when the handle assembly is unlocked by rotating the cam disk 104, the frequency piece 105 fixedly connected to the upper bracket 102 can slide relative to the steering column sleeve 101. As shown in Fig. 3C, the lubricant storage structures 105a on the frequency piece 105 are formed on the sliding surface which faces the sliding fit surface of the steering column sleeve 101.

The lubricant storage structures 105a described above may be blind holes or blind grooves, as shown in Fig. 3D.

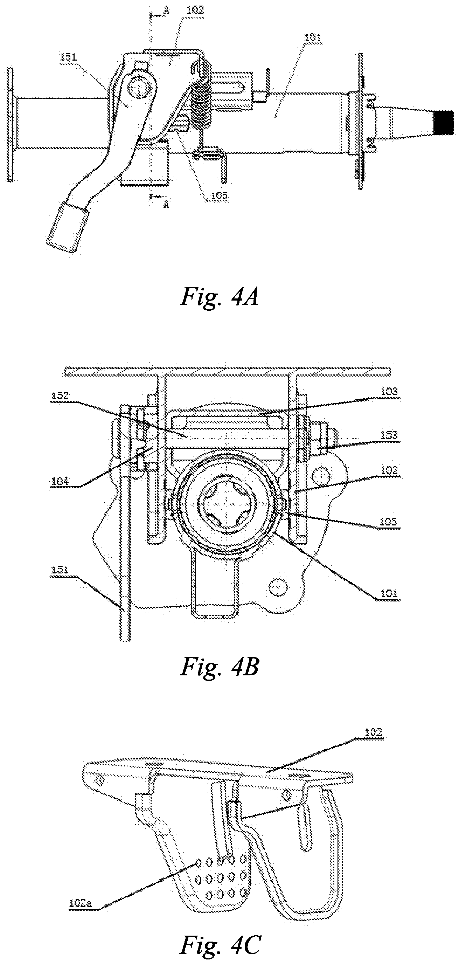

Fig. 4A is a side view of an adjusting system of an automobile steering column according to a third embodiment of the present invention. Fig. 4B is a radial cross-sectional view of the adjusting system of an automobile steering column shown in Fig. 4A. Fig. 4C shows a view of an upper bracket in the third embodiment of the present invention shown in Fig. 4A.

In comparison with the embodiment shown in Fig. 2A, the difference from the adjusting system of an automobile steering column shown in Fig. 4A lies in that: one side face of the frequency piece 105 is fixedly mounted on the steering column sleeve 101, the other side face of the frequency piece is a sliding surface, the upper bracket 102 forms a sliding fit surface slidably fitted to the sliding surface, and a plurality of lubricant storage structures 102a are arranged on the sliding fit surface.

As shown in Fig. 4C, in the third embodiment, a plurality of lubricant storage structures 102a are formed on inner sides of the side plates of the upper bracket 102. These lubricant storage structures may be blind holes or blind grooves. In Fig. 4C, only the lubricant storage structures 102a on the inner side of one side plate of the upper bracket 102 are shown, and the same lubricant storage structures 102a are symmetrically provided on the inner side of the other side plate.

In the above-described adjusting system of an automobile steering column according to the present invention, the frequency pieces 105 are made of materials with good vibration damping properties. For example, engineering plastics such as polyurethane, polyvinyl chloride and epoxy resin may be used, and high-damping alloy such as copper-zinc-aluminum alloy, iron-chromium-molybdenum alloy, manganese-copper alloy and the like may be used. When the engineering plastics are high-strength foamed plastics, the lubricant storage structures 105a on the frequency pieces 105 may be cells of the high-strength foamed plastics.

In the above-described adjusting system of an automobile steering column according to the present invention, when the handle assembly is unlocked by rotating the cam disk through the handle, the height and/or the length of the steering column sleeve relative to the upper bracket may be adjusted through the sliding fit between the sliding surface and the sliding fit surface; and locking is achieved by rotating the cam disk through the handle when the adjustment is in place, so that height and/or length adjustment of the upper bracket is completed.

By providing the at least one frequency piece 105, it enables the upper bracket 102 to better clamp the steering column sleeve 101, increasing the clamping area and improving the natural frequency, thereby reducing the noises caused by gaps.

However, when the adjustment of the steering column sleeve with respect to the upper bracket is performed, a frictional force between the sliding surface of the at least one frequency piece 105 and the sliding fit surface fitted therewith will affect the smoothness of adjustment. To this end, lubricant may be added between the sliding surface and the sliding fit surface to ensure smooth adjustment. However, the lubricant is easily lost. It is necessary to frequently perform relevant maintenance to add lubricant.

By providing the at least one lubricant storage structure, particularly enabling at least part of the at least one lubricant storage structure to be always sealed between the sliding surface and the sliding fit surface, lubricant supplement may be continuously obtained between the sliding surface of the at least one frequency piece 105 and the sliding fit surface of the upper bracket 102, and the time period of adding lubricant may be greatly extended, there is even no need of re-adding lubricant throughout the entire life time of the products. Therefore, the product quality is improved, and the maintenance cost is reduced.

For ease of explanation and precise definition of the appended claims, the terms "upper", "lower", "inner", and "outer" are used to describe features of the exemplary embodiments with reference to the locations of such features shown in the drawings.

The foregoing descriptions of the specific exemplary embodiments of the present invention are presented for purposes of illustration and exemplification. These descriptions are not intended to be exhaustive or to limit the present invention to the precise forms disclosed, and obviously many modifications and variations are possible in light of the above teachings. The exemplary embodiments are chosen and described in order to explain certain principles of the present invention and their practical application, to thereby enable those skilled in the art to make and utilize various exemplary embodiments of the present invention, as well as various alternatives and modifications thereof. It is intended that the scope of the present invention is defined by the claims appended hereto

## Claims

1. An adjusting system of an automobile steering column, comprising a steering column sleeve (101), an upper bracket (102), a clamping bracket (103), a cam disk (104) and a handle assembly, the clamping bracket (103) being integrally combined with the steering column sleeve (101), the upper bracket (102) comprising at least one side plate, the handle assembly comprising a handle (151), a bolt (152) and a locking nut (153), and the bolt passing through the handle, the cam disk (104), the at least one side plate and the clamping bracket (103) and then being locked by the locking nut (153),
wherein the adjusting system of an automobile steering column further comprises at least one frequency piece (105) provided between the at least one side plate and the steering column sleeve, one side face of the at least one frequency piece (105), which has an effect on the natural frequency of the whole system, thereby reducing the noises caused by gaps due to fit tolerances and manufacturing tolerances, and which is fixedly mounted on one of the upper bracket and the steering column sleeve, the other side face of the at least one frequency piece is a sliding surface, the other one of the upper bracket and the steering column sleeve forms a sliding fit surface slidably fitted to the sliding surface, and at least one lubricant storage structure is provided on the sliding surface or the sliding fit surface.

2. The adjusting system of an automobile steering column according to claim 1, wherein the at least one side plate comprises a first side plate and a second side plate, two frequency pieces (105) are provided, the two frequency pieces are respectively located between the first side plate and the steering column sleeve and between the second side plate and the steering column sleeve, and the bolt sequentially passes through the handle, the cam disk (104), the first side plate of the upper bracket (102), the clamping bracket (103), and the second side plate of the upper bracket (102), and then is locked by the locking nut (153).

3. The adjusting system of an automobile steering column according to claim 1, wherein at least part of the at least one lubricant storage structure is always sealed between the sliding surface and the sliding fit surface.

4. The adjusting system of an automobile steering column according to claim 1, wherein the at least one lubricant storage structure comprises a blind hole or a blind groove.

5. The adjusting system of an automobile steering column according to claim 1, wherein one side face of the at least one frequency piece (105) is fixedly mounted on a steering column sleeve (101), and the at least one lubricant storage structure is provided on the sliding surface.

6. The adjusting system of an automobile steering column according to claim 1, wherein one side face of the at least one frequency piece (105) is fixedly mounted on the steering column sleeve (101), and the at least one lubricant storage structure is provided on the sliding fit surface.

7. The adjusting system of an automobile steering column according to claim 1, wherein one side face of the at least one frequency piece (105) is fixedly mounted on the upper bracket (102), and the at least one lubricant storage structure is provided on the sliding surface.

8. The adjusting system of an automobile steering column according to claim 1, wherein the at least one frequency piece (105) is made of vibration damping materials.

9. The adjusting system of an automobile steering column according to claim 8, wherein the vibration damping materials are engineering plastics or resin.

10. The adjusting system of an automobile steering column according to claim 9, wherein the engineering plastics are high-strength foamed plastics, and the at least one lubricant storage structure comprises cells of the high-strength foamed plastics.

11. The adjusting system of an automobile steering column according to claim 8, wherein the vibration damping materials are high-damping alloy.

## Patentansprüche

1. Verstellsystem einer Kraftfahrzeuglenksäule, das eine Lenksäulenhülse (101), einen oberen Bügel (102), einen Klemmbügel (103), eine Nockenscheibe (104) und eine Griffanordnung umfasst, wobei der Klemmbügel (103) einstückig mit der Lenksäulenhülse (101) verbunden ist, der obere Bügel (102) mindestens eine Seitenplatte umfasst, die Griffanordnung einen Griff (151), einen Bolzen (152) und eine Sicherungsmutter (153) umfasst und der Bolzen durch den Griff, die Nockenscheibe (104), die mindestens eine Seitenplatte und den Klemmbügel (103) hindurchgeht und dann durch die Sicherungsmutter (153) gesichert wird,
wobei das Verstellsystem einer Kraftfahrzeuglenksäule ferner mindestens ein Frequenzstück (105) umfasst, das zwischen der mindestens einen Seitenplatte und der Lenksäulenhülse vorgesehen ist, wobei eine Seitenfläche des mindestens einen Frequenzstücks (105), das sich auf die Eigenfrequenz des gesamten Systems auswirkt und dadurch die Geräusche reduziert, die durch Lücken aufgrund von Passungs- und Fertigungstoleranzen verursacht werden, und die fest an einer der oberen Halterung und der Lenksäulenhülse angebracht ist, die andere Seitenfläche des mindestens einen Frequenzstücks eine Gleitfläche ist, die andere der oberen Halterung und der Lenksäulenhülse eine Gleitsitzfläche bildet, die gleitend an der Gleitfläche angebracht ist, und mindestens eine Schmiermittelspeicherstruktur an der Gleitfläche oder der Gleitsitzfläche vorgesehen ist.

2. Das Verstellsystem einer Kraftfahrzeuglenksäule nach Anspruch 1, wobei die mindestens eine Seitenplatte eine erste Seitenplatte und eine zweite Seitenplatte umfasst, zwei Frequenzstücke (105) vorgesehen sind, die beiden Frequenzstücke jeweils zwischen der ersten Seitenplatte und der Lenksäulenhülse und zwischen der zweiten Seitenplatte und der Lenksäulenhülse angeordnet sind, und der Bolzen nacheinander durch den Griff, die Nockenscheibe (104), die erste Seitenplatte des oberen Bügels (102), den Klemmbügel (103) und die zweite Seitenplatte des oberen Bügels (102) geführt und dann durch die Sicherungsmutter (153) gesichert wird.

3. Das Verstellsystem einer Kraftfahrzeuglenksäule nach Anspruch 1, wobei mindestens ein Teil der mindestens einen Schmiermittelspeicherstruktur stets zwischen der Gleitfläche und der Gleitsitzfläche abgedichtet ist.

4. Das Verstellsystem einer Kraftfahrzeuglenksäule nach Anspruch 1, wobei die mindestens eine Schmiermittelspeicherstruktur ein Sackloch oder eine Sacklochnut umfasst.

5. Das Verstellsystem einer Kraftfahrzeuglenksäule nach Anspruch 1, wobei eine Seitenfläche des mindestens einen Frequenzstücks (105) fest an einer Lenksäulenhülse (101) angebracht ist und die mindestens eine Schmiermittelspeicherstruktur an der Gleitfläche vorgesehen ist.

6. Das Verstellsystem einer Kraftfahrzeuglenksäule nach Anspruch 1, wobei eine Seitenfläche des mindestens einen Frequenzstücks (105) fest an der Lenksäulenhülse (101) angebracht ist und die mindestens eine Schmiermittelspeicherstruktur an der Gleitsitzfläche vorgesehen ist.

7. Das Verstellsystem einer Kraftfahrzeuglenksäule nach Anspruch 1, wobei eine Seitenfläche des mindestens einen Frequenzstücks (105) fest an dem oberen Bügel (102) angebracht ist und die mindestens eine Schmiermittelspeicherstruktur an der Gleitfläche vorgesehen ist.

8. Das Verstellsystem einer Kraftfahrzeuglenksäule nach Anspruch 1, wobei das mindestens eine Frequenzstück (105) aus schwingungsdämpfenden Materialien besteht.

9. Das Verstellsystem einer Kraftfahrzeuglenksäule nach Anspruch 8, wobei die schwingungsdämpfenden Materialien technische Kunststoffe oder Harze sind.

10. Das Verstellsystem einer Kraftfahrzeuglenksäule nach Anspruch 9, wobei die technischen Kunststoffe hochfeste geschäumte Kunststoffe sind und die mindestens eine Schmiermittel-Speicherstruktur Zellen aus den hochfesten geschäumten Kunststoffen umfasst.

11. Das Verstellsystem einer Kraftfahrzeuglenksäule nach Anspruch 8, wobei die schwingungsdämpfenden Materialien eine hochdämpfende Legierung sind.

## Revendications

1. Système de réglage d'une colonne de direction d'automobile, comprenant un manchon de colonne de direction (101), un support supérieur (102), un support de serrage (103), un disque à cames (104) et une poignée, le support de serrage (103) étant combiné intégralement avec le manchon de colonne de direction (101), le support supérieur (102) comprenant au moins une plaque latérale, l'ensemble de poignée comprenant une poignée (151), un boulon (152) et un écrou de blocage (153), le boulon traversant la poignée, le disque à cames (104), la plaque latérale au moins et le support de serrage (103) et étant ensuite bloqué par l'écrou de blocage (153),
dans lequel le système de réglage d'une colonne de direction automobile comprend en outre au moins une pièce de fréquence (105) placée entre la plaque latérale au moins et le manchon de la colonne de direction, une face latérale de la pièce de fréquence au moins (105), qui a un effet sur la fréquence naturelle de l'ensemble du système, réduisant ainsi les bruits causés par les écarts dus aux tolérances d'ajustement et aux tolérances de fabrication, et qui est montée de manière fixe sur l'un des supports supérieurs et le manchon de la colonne de direction, l'autre face latérale de l'au moins une pièce de fréquence est une surface de glissement, l'autre support supérieur et le manchon de la colonne de direction forment une surface d'ajustement coulissante ajustée de manière coulissante à la surface de glissement, et au moins une structure de stockage de lubrifiant est prévue sur la surface de glissement ou sur la surface d'ajustement coulissante.

2. Le Système de réglage d'une colonne de direction automobile selon la revendication 1, dans lequel la plaque latérale au moins comprend une première plaque latérale et une deuxième plaque latérale, deux pièces de fréquence (105) sont fournies, les deux pièces de fréquence sont respectivement situées entre la première plaque latérale et le manchon de la colonne de direction et entre la deuxième plaque latérale et le manchon de la colonne de direction, et le boulon passe séquentiellement à travers la poignée, le disque de came (104), la première plaque latérale du support supérieur (102), le support de serrage (103) et la deuxième plaque latérale du support supérieur (102), puis est bloqué par l'écrou de blocage (153).

3. Le système de réglage d'une colonne de direction automobile selon la revendication 1, dans lequel au moins une partie de la structure de stockage du lubrifiant est toujours scellée entre la surface de glissement et la surface d'ajustement du glissement.

4. Le système de réglage d'une colonne de direction automobile selon la revendication 1, dans lequel l'au moins une structure de stockage de lubrifiant comprend un trou borgne ou une rainure borgne.

5. Le système de réglage d'une colonne de direction automobile selon la revendication 1, dans lequel une face latérale de l'au moins une pièce de fréquence (105) est montée de manière fixe sur un manchon de colonne de direction (101), et l'au moins une structure de stockage de lubrifiant est prévue sur la surface de glissement.

6. Le système de réglage d'une colonne de direction automobile selon la revendication 1, dans lequel une face latérale de l'au moins une pièce de fréquence (105) est montée de manière fixe sur le manchon de la colonne de direction (101), et l'au moins une structure de stockage de lubrifiant est prévue sur la surface d'ajustement coulissante.

7. Le Système de réglage d'une colonne de direction automobile selon la revendication 1, dans lequel une face latérale de l'au moins une pièce de fréquence (105) est montée de manière fixe sur le support supérieur (102), et l'au moins une structure de stockage de lubrifiant est prévue sur la surface de glissement.

8. Le système de réglage d'une colonne de direction automobile selon la revendication 1, dans lequel au moins une pièce de fréquence (105) est faite de matériaux amortissant les vibrations.

9. Le système de réglage d'une colonne de direction automobile selon la revendication 8, dans lequel les matériaux amortissant les vibrations sont des plastiques ou des résines techniques.

10. Le système de réglage d'une colonne de direction automobile selon la revendication 9, dans lequel les plastiques techniques sont des plastiques moussés à haute résistance, et la structure de stockage du lubrifiant au moins comprend des cellules de plastiques moussés à haute résistance.

11. Le système de réglage d'une colonne de direction automobile selon la revendication 8, dans lequel les matériaux d'amortissement des vibrations sont des alliages à amortissement élevé.
